# EUROPÄISCHE PATENTANMELDUNG

(11) **EP 2 248 658 A2**
(43) Veröffentlichungstag der Anmeldung: **10.11.2010**
(21) Anmeldenummer: 10002030.4
(22) Anmeldetag: 26.02.2010
(51) Int. Cl.: B29C 65/18, B29C 65/60

(54) **Vorrichtung zum Verbinden von Gegenständen über wenigstens ein durch Wärme plastifizierbares Verbindungselement**

(30) Priorität: 06.05.2009 DE 102009020180
(71) Anmelder: Maschinenfabrik Spaichingen GmbH, 78549 Spaichingen (DE)
(72) Erfinder: Prirsch, Bernd, 78667 Villingendorf (DE)
(74) Vertreter: Manitz, Finsterwald & Partner GbR

(57) **Zusammenfassung**

Eine Vorrichtung zum Verbinden von Gegenständen über wenigstens ein durch Wärme plastifizierbares Verbindungselement umfasst eine zum Verbindungselement hin und von diesem wegbewegbare, einen Schaft (10) aufweisende beheizbare Kalotte (12) zur Ausbildung eines Nietkopfes am Verbindungselement und Mittel zum direkten Beheizen der Kalotte. Dabei umfassen die Mittel zum direkten Beheizen der Kalotte wenigstens ein Keramikheizelement (16).

## Beschreibung

Die Erfindung betrifft eine Vorrichtung zum Verbinden von Gegenständen über wenigstens ein durch Wärme plastifizierbares Verbindungselement, mit einer zum Verbindungselement hin und von diesem wegbewegbaren, einen Schaft aufweisenden beheizbaren Kalotte zur Ausbildung eines Nietkopfes am Verbindungselement und Mitteln zum direkten Beheizen der Kalotte.

Vorrichtungen dieser Art arbeiten nach dem so genannten Nietdom-Schweißprinzip, wonach zunächst ein an einem der Gegenstände angebrachtes Verbindungselement mit einem an ihm ausgebildeten Vorsprung, dem so genannten Nietdom, durch eine Öffnung des anderen Gegenstandes gesteckt und dann am freien Ende des Nietdoms mit einem angeformten Nietkopf versehen wird. Dabei kann das Verbindungselement auch aus einem separaten Bauteil bestehen, das durch beide Gegenstände gesteckt wird und an einem Ende einen bereits angebrachten Kopf aufweist.

Die Anforderung des Nietkopfs erfolgt bei Anwendung des beschriebenen Schweißprinzips dadurch, dass der Nietdom durch Erwärmung plastifiziert und mittels eines nachfolgend als Kalotte bezeichneten und gegen den Nietdom gedrückten Werkzeugs in die im Einzelfall erwünschte Form gebracht wird. Dabei besteht meistens wenigstens einer der beiden Fügepartner aus einem plastifizierbaren Kunststoff, obwohl es prinzipiell aber auch ausreicht, wenn allein die beteiligten Verbindungselemente oder die an diesem vorgesehenen Nietdome aus einem plastifizierbaren Material bestehen.

Eine Vorrichtung der eingangs genannten Art ist in der DE 10 2004 057 453 B3 beschrieben. Dabei wird eine Nietkalotte an eine Wärmequelle angekoppelt und aufgeheizt. Sobald die Kalotte eine Temperatur erreicht hat, die über der Erweichungstemperatur des zu bearbeitenden Werkstoffs liegt, wird sie auf das Werkstück abgesenkt und formt einen Nietdom zu einem Nietkopf um. Anschließend wird die Nietkalotte von der Wärmequelle abgekoppelt und dadurch abgekühlt. Die Wärmequelle umfasst eine elektrische Heizwendel, die kontinuierlich betrieben wird. Zum Abkühlen der Kalotte wird die die elektrische Heizwendel umfassende Wärmequelle vor dem Abziehen der Kalotte vom Nietkopf von dieser getrennt. Der hierfür erforderliche bauliche Aufwand ist relativ groß.

Der Erfindung liegt die Aufgabe zugrunde, eine verbesserte Vorrichtung der eingangs genannten Art zu schaffen, bei der die zuvor erwähnten Nachteile beseitigt sind. Dabei soll bei minimiertem baulichem Aufwand auch weiterhin insbesondere ein rasches Aufheizen der Kalotte gewährleistet sein.

Die Aufgabe wird erfindungsgemäß dadurch gelöst, dass die Mittel zum direkten Beheizen der Kalotte wenigstens ein Keramikheizelement umfassen.

Die Erfindung macht sich damit unter anderem den Umstand zunutze, dass Keramikheizelemente relativ wenig Raum beanspruchen und eine relativ schnelle Aufheizrate besitzen. Weiterhin besitzen Keramikheizelemente eine relativ geringe Masse, so dass sie schnell wieder abgekühlt werden können.

Dabei steht das Keramikheizelement vorzugsweise in direktem Kontakt mit dem Kalottenkörper.

Es kann insbesondere fest mit der Kalotte verbunden sein.

Gemäß einer bevorzugten praktischen Ausführungsform der erfindungsgemäßen Vorrichtung ist das Keramikheizelement gegen den Kalottenkörper gepresst.

Von Vorteil ist insbesondere auch, wenn das Keramikheizelement eine ringförmige Gestalt besitzt und in direktem Kontakt mit dem Kalottenkörper auf den Kalottenschaft aufgebracht ist.

Eine bevorzugte praktische Ausführungsform der erfindungsgemäßen Vorrichtung zeichnet sich dadurch aus, dass das Keramikheizelement zwischen den Kalottenkörper und einen Kalottenträger eingespannt ist, wobei der Schaft der Kalotte ein Außengewinde aufweist und in ein Innengewinde des Kalottenträgers eingeschraubt ist. Das Keramikheizelement wird hierbei also durch Einschrauben des Kalottenschaftes in das Innengewinde des Kalottenträgers zwischen den Kalottenkörper und den Kalottenträger eingespannt.

Es ergibt sich somit eine äußerst einfache kompakte Anordnung, mit der die Kalotte nach einer jeweiligen Abkühlung sehr rasch wieder auf die für den Schweißvorgang erforderliche Temperatur aufheizbar ist.

Das Keramikheizelement kann insbesondere aus einem Material hergestellt sein, das wenigstens eine der folgenden Verbindungen enthält: Aluminiumoxid (Al₂O₃), Zirkoniumdioxid (ZrO₂), Siliziumnitrid (Si₃N₄) und Aluminiumnitrid (AlN).

Dem Keramikheizelement sind vorteilhafterweise Mittel zur Erfassung und Überwachung der Temperatur zugeordnet. Dabei können diese Mittel insbesondere wenigstens einen Thermofühler umfassen.

Gemäß einer bevorzugten Ausführungsform sind Mittel zur Innenkühlung der Kalotte mittels eines Kühlfluids vorgesehen.

Indem der Kalottenkörper von innen gekühlt wird, ergibt sich insgesamt ein relativ geringer Kühlfluidverbrauch bzw. eine relativ kurze Abkühlzeit, eine deutliche Geräuschminimierung sowie eine kompakte Bauform.

Hierbei ist insbesondere von Vorteil, wenn der Schaft der Kalotte einen vorzugsweise bis in den Kalottenkörper reichenden zentralen Kühlfluidzufuhrkanal besitzt und innerhalb des Kalottenkörpers mehrere ausgehend vom zentralen Kühlfluidzufuhrkanal jeweils zumindest allgemein radial nach außen geführte Kühlfluidkanäle vorgesehen sind.

Alternativ kann die Kalotte zumindest teilweise auch aus porösem, luftdurchlässigem Material, insbesondere Keramikmaterial, hergestellt und der Schaft der Kalotte mit einer vorzugsweise bis in den Kalottenkörper reichenden zentralen Kühlfluidzufuhrbohrung versehen sein.

Dabei ist zumindest der Kalottenkörper aus einem solchen porösen, luftdurchlässigen Material, insbesondere Keramikmaterial, hergestellt. Bevorzugt gilt dies jedoch auch für den Kalottenschaft.

Das über die zentrale Kühlfluidzufuhrbohrung zugeführte Kühlfluid strömt somit über eine Vielzahl von kleinen Kanälen durch den porösen, luftdurchlässigen Kalottenkörper und vorzugsweise auch den Kalottenschaft nach außen, wodurch die Kalotte gleichmäßig und wirkungsvoll abgekühlt wird.

Die Erfindung wird im Folgenden anhand von Ausführungsbeispielen unter Bezugnahme auf die Zeichnung näher erläutert; in dieser zeigen:
- Fig. 1: eine vereinfachte schematische Teildarstellung einer beispiel- haften Ausführungsform der erfindungsgemäßen Vorrichtung, und
- Fig. 2: eine vereinfachte schematische Teildarstellung einer weiteren beispielhaften Ausführungsform der erfindungsgemäßen Vor- richtung, wobei zusätzlich Mittel zur Innenkühlung der Kalot- te vorgesehen sind.

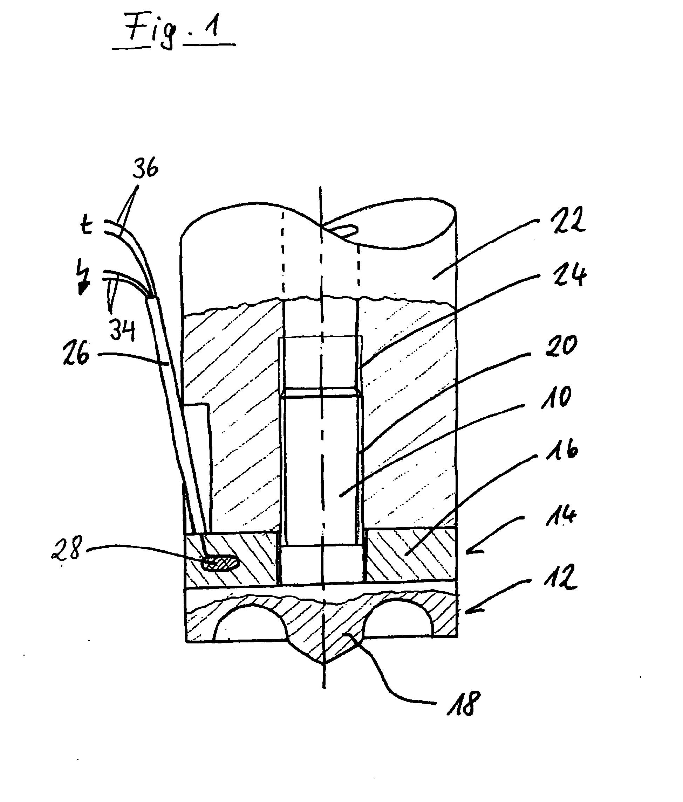

Fig. 1 zeigt in vereinfachter schematischer Teildarstellung eine beispielhafte Ausführungsform einer Vorrichtung zum Verbinden von Gegenständen über wenigstens ein durch Wärme plastifizierbares Verbindungselement mit einer zum Verbindungselement hin und von diesem wegbewegbaren, einen Schaft 10 aufweisenden beheizbaren Kalotte 12 zur Ausbildung eines Nietkopfes am Verbindungselement und Mitteln 14 zum direkten Beheizen der Kalotte 12.

Dabei umfassen die Mittel 14 zum direkten Beheizen der Kalotte 12 wenigstens ein Keramikheizelement 16.

Das Keramikheizelement 16 steht in direktem Kontakt mit dem Kalottenkörper 18. Dabei kann das Keramikheizelement 16 insbesondere fest mit der Kalotte 12 verbunden sein.

Vorteilhafterweise ist das Keramikheizelement 16 gegen den Kalottenkörper 18 gepresst.

Das Keramikheizelement 16 kann insbesondere eine ringförmige Gestalt besitzen und in direktem Kontakt mit dem Kalottenkörper 18 auf den Kalottenschaft 10 aufgebracht sein.

Dabei ist das Keramikheizelement 16 zweckmäßigerweise zwischen den Kalottenkörper 18 und einen Kalottenträger 22 eingespannt, wobei der Schaft 10 der Kalotte 12 ein Außengewinde 20 aufweist und in ein Innengewinde 24 des Kalottenträgers 22 eingespannt ist. Das Keramikheizelement 16 wird hierbei also durch Einschrauben des Kalottenschaftes 10 in das Innengewinde 24 des Kalottenträgers 22 zwischen den Kalottenkörper 18 und den Kalottenträger 22 eingespannt.

Dem Keramikheizelement 16 können insbesondere auch Mittel zur Erfassung und/oder Überwachung der Temperatur zugeordnet sein, wobei diese insbesondere wenigstens einen Thermofühler umfassen können. In Fig. 1 sind ein solcher dem Keramikheizelement 16 zugeordneter Thermofühler 28 sowie ein elektrischer Anschluss 26 zu erkennen, der Leitungen 34 zur Stromversorgung des Thermofühlers 28 und Leitungen 36 zum Auswerten der Messsignale des Thermofühlers 28 beinhaltet.

Im vorliegenden Fall ist der Kalotte 12 lediglich ein einziges Keramikheizelement 16 zugeordnet.

Grundsätzlich ist es auch denkbar, wenigstens zwei solche Keramikheizelemente für eine jeweilige Kalotte 12 vorzusehen.

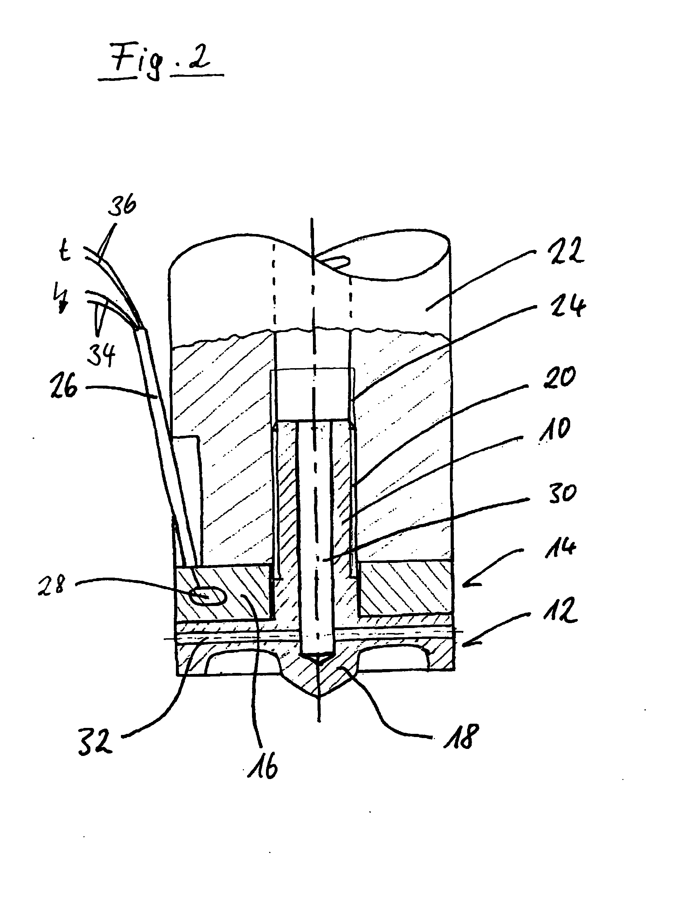

Fig. 2 zeigt in vereinfachter schematischer Teildarstellung eine weitere beispielhafte Ausführungsform der Vorrichtung, welche sich von der Ausführungsform gemäß Fig. 1 im wesentlichen nur dadurch unterscheidet, dass zusätzlich Mittel 30, 32 zur Innenkühlung der Kalotte 12 mittels eines Kühlfluids vorgesehen sind.

Dabei kann die Kalotte 12 insbesondere mit einem zentralen Kühlfluidzufuhrkanal 30 sowie mit mehreren zumindest im wesentlichen radial nach außen verlaufenden Kühlfluidkanälen 32 versehen sein, so dass die Kalotte 12 von innen heraus gekühlt werden kann.

Im übrigen kann diese Ausführungsform gemäß Fig. 2 zumindest im wesentlichen wieder den gleichen Aufbau besitzen wie die Ausführungsform gemäß Fig. 1. Einander entsprechenden Teilen sind gleiche Bezugszeichen zugeordnet.

### Bezugszeichenliste

- 10: Schaft
- 12: Kalotte
- 14: Mittel zum direkten Beheizen der Kalotte
- 16: Keramikheizelement
- 18: Kalottenkörper
- 20: Außengewinde
- 22: Kalottenträger
- 24: Innengewinde
- 26: Anschluss
- 28: Thermofühler
- 30: Kühlfluidzufuhrkanal
- 32: Kühlfluidkanal
- 34: Leitungen zur Stromversorgung des Thermofühlers 28
- 36: Leitungen zum Auswerten der Messsignale des Ther- mofühlers 28

## Patentansprüche

1. Vorrichtung zum Verbinden von Gegenständen über wenigstens ein durch Wärme plastifizierbares Verbindungselement, mit einer zum Verbindungselement hin und von diesem wegbewegbaren, einen Schaft (10) aufweisenden beheizbaren Kalotte (12) zur Ausbildung eines Nietkopfes am Verbindungselement und Mitteln (14) zum direkten Beheizen der Kalotte (12), **dadurch gekennzeichnet,**
**dass** die Mittel (14) zum direkten Beheizen der Kalotte (12) wenigstens ein Keramikheizelement (16) umfassen.

2. Vorrichtung nach Anspruch 1,
**dadurch gekennzeichnet,**
**dass** das Keramikheizelement (16) in direktem Kontakt mit dem Kalottenkörper (18) steht.

3. Vorrichtung nach Anspruch 2,
**dadurch gekennzeichnet,**
**dass** das Keramikheizelement (16) fest mit der Kalotte (12) verbunden ist.

4. Vorrichtung nach einem der vorhergehenden Ansprüche,
**dadurch gekennzeichnet,**
**dass** das Keramikheizelement (16) gegen den Kalottenkörper (18) gepresst ist.

5. Vorrichtung nach einem der vorhergehenden Ansprüche,
**dadurch gekennzeichnet,**
**dass** das Keramikheizelement (16) eine ringförmige Gestalt besitzt und in direktem Kontakt mit dem Kalottenkörper (18) auf den Kalottenschaft (10) aufgebracht ist.

6. Vorrichtung nach Anspruch 5,
**dadurch gekennzeichnet,**
**dass** das Keramikheizelement (16) zwischen den Kalottenkörper (18) und einen Kalottenträger (22) eingespannt ist, wobei der Schaft (10) der Kalotte (12) ein Außengewinde (20) aufweist und in ein Innengewinde (24) des Kalottenträgers (22) eingeschraubt ist.

7. Vorrichtung nach einem der vorhergehenden Ansprüche,
**dadurch gekennzeichnet,**
**dass** dem Keramikheizelement (16) Mittel zur Temperaturerfassung und/oder -überwachung zugeordnet sind, wobei diese vorzugsweise wenigstens einen Thermofühler (28) umfassen.

8. Vorrichtung nach einem der vorhergehenden Ansprüche,
**dadurch gekennzeichnet,**
**dass** Mittel (30, 32) zur Innenkühlung der Kalotte (12) mittels eines Kühlfluids vorgesehen sind.

9. Vorrichtung nach Anspruch 8,
**dadurch gekennzeichnet,**
**dass** der Schaft (10) der Kalotte (12) einen vorzugsweise bis in den Kalottenkörper (14) reichenden zentralen Kühlfluidzufuhrkanal (30) besitzt und innerhalb des Kalottenkörpers (14) mehrere ausgehend vom zentralen Kühlfluidzufuhrkanal (30) jeweils zumindest allgemein radial nach außen geführte Kühlfluidkanäle (32) vorgesehen sind.

10. Vorrichtung nach Anspruch 8,
**dadurch gekennzeichnet,**
**dass** die Kalotte (12) zumindest teilweise aus porösem, luftdurchlässigem Material, insbesondere Keramikmaterial, hergestellt ist und dass der Schaft (10) der Kalotte (12) mit einer vorzugsweise bis in den Kalottenkörper (14) reichenden zentralen Kühlfluidzufuhrbohrung versehen ist.
